# FASCICULE DE BREVET EUROPEEN

(11) **EP 1 001 890 B1**
(45) Date de publication et mention de la délivrance du brevet: **02.10.2002**
(21) Numéro de dépôt: 98941548.4
(22) Date de dépôt: 05.08.1998
(51) Int. Cl.: B60R 5/04, B60R 7/02, B60R 21/02

(54) **DISPOSITIF D'AMENAGEMENT DE LA PARTIE ARRIERE DE CHARGEMENT D'UN HABITACLE DE VEHICULE AUTOMOBILE**
EINBAUVORRICHTUNG FÜR DEN RÜCKSEITIGEN LADERAUM EINES FAHRZEUGINNENRAUMES
INSTALLATION DEVICE FOR THE LOADING REAR PART OF A MOTOR VEHICLE PASSENGER COMPARTMENT

(30) Priorité: 05.08.1997 FR 9710026
(43) Date de publication de la demande: 24.05.2000
(73) Titulaire: Renault s.a.s., 92100 Boulogne Billancourt (FR)
(72) Inventeur: MUSSET, Olivier, F-92310 Sèvres (FR)
(86) Numéro de dépôt international: FR9801749
(87) Numéro de publication internationale: WO99007577

(56) Documents cités:
- EP-A- 0 647 547
- EP-A- 0 667 260
- DE-A- 3 147 785
- DE-A- 19 639 610
- FR-A- 2 645 479
- GB-A- 2 261 856
- US-A- 5 492 257

## Description

La présente invention concerne un dispositif d'aménagement de la partie arrière d'un habitacle de véhicule automobile.

Dans un grand nombre de véhicules automobiles, qu'il s'agisse de véhicules de tourisme ou de véhicules de type "utilitaires", les accidents comportant un choc frontal sont particulièrement dangereux.

En effet, outre le danger provenant des dommages à l'avant du véhicule, il existe un risque supplémentaire dû à la présence de bagages, ou de toute charge transportée, dans une partie arrière de l'habitacle du véhicule qui forme une zone de chargement.

Dans le cas d'un choc frontal violent, les charges posées à l'arrière de l'habitacle risquent d'être propulsées vers l'avant à travers l'habitacle à différentes hauteurs et de heurter les dossiers de sièges, voire les passagers. Ceci est particulièrement dangereux et doit être évité dans la mesure du possible.

Pour tenter de résoudre ce problème, il est déjà connu d'utiliser des dispositifs comportant au moins une barre télescopique, agencée transversalement de manière fixe dans la partie arrière de l'habitacle, sensiblement à la hauteur des dossiers et maintenues sur les parois latérales de l'habitacle.

De même, il est connu d'utiliser des systèmes de rideaux ou de ceintures comportant des enrouleurs, qui sont fixés sur un hayon arrière du véhicule ou sur des dossiers de sièges, et qui s'étendent en général verticalement pour empêcher toute intrusion de charge dans la partie de l'habitacle dans laquelle sont installés les passagers.

Enfin, il existe, comme on peut le voir notamment dans le document EP-A-0.710.589, des dispositifs d'aménagement (selon le préambule de la revendication 1) de la partie arrière de l'habitacle d'un véhicule automobile formant zone de chargement, du type comportant un écran transversal porté par une structure qui est articulée, autour d'un axe transversal inférieur, entre une position relevée de protection, dans laquelle l'écran est disposé sensiblement verticalement parallèlement à la face arrière d'un dossier de siège, et une position basculée dans laquelle l'écran est ici escamoté et s'étend horizontalement le long du plancher.

La publication GB-A-2261856 décrit un dispositif d'aménagement de la partie arrière de l'habitacle d'un véhicule automobile formant zone de chargement, du type comportant un écran transversal porté par une structure articulée.

La publication DE-A-19639610 décrit un ensemble de solution de retenue de charges, localisées dans le compartiment à bagage derrière un siège.

Cependant, tous ces dispositifs de protection ne peuvent pas s'adapter à tous les types de véhicules. En particulier, ces dispositifs ne conviennent pas à des véhicules dont les sièges, et notamment les sièges ou banquettes arrières, sont équipés de dossiers qui sont divisés en plusieurs parties pouvant être rabattues en position horizontale indépendamment les unes des autres.

De plus, ces dispositifs de protection de l'habitacle peuvent être encombrants si, en particulier dans le cas d'un véhicule de type "utilitaire", l'arrière du véhicule comporte un système de cloisonnement de la zone de chargement pour séparer différentes charges, ou si l'on veut créer des espaces particuliers, pour des animaux domestiques par exemple, en plus d'un espace pour d'autres chargements.

Pour résoudre ces différents problèmes, l'invention propose un dispositif d'aménagement de la partie arrière d'un véhicule selon la revendication 1.

Selon d'autres caractéristiques de l'invention:
- la structure de l'écran comporte deux montants latéraux qui comprennent des moyens d'articulation de la structure et sur lesquels sont agencées au moins deux barres transversales qui délimitent verticalement l'écran, une barre de protection et une barre de division qui sont respectivement en position haute et basse lorsque l'écran est en position avancée ;
- les montants latéraux de la structure sont formés par des branches formant un "L", des moyens d'articulation étant agencés à une extrémité d'une branche, la barre de division à l'extrémité de l'autre branche, et la barre de protection sensiblement à l'intersection des branches ;
- le dispositif comporte un dispositif de blocage en rotation de la structure, notamment en position basculée ;
- la structure occupe transversalement une partie de la largeur de la zone de chargement pour une utilisation du dispositif dans le cas où le dossier est en plusieurs parties pouvant être rabattues individuellement ;
- le dispositif comporte une tige transversale de protection, qui est agencée télescopique sur la structure de l'écran pour s'étendre en regard du reste de la largeur de la zone de chargement ;
- un filet est agencé entre les barres transversales.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un dispositif d'aménagement de la partie arrière de l'habitacle d'un véhicule conformément aux enseignements de l'invention et qui est illustré en position relevée avec un dossier de siège non rabattu ;
- la figure 2 est une vue en perspective similaire à celle de la figure 1, dans laquelle le dispositif est en position basculée ;
- la figure 3 est une vue en perspective du dispositif similaire à celle de la figure 1 et dans laquelle une partie des dossiers de sièges est rabattue indépendamment ;
- la figure 4 est une vue similaire à la précédente, dans laquelle tous les dossiers de sièges sont relevés et dans laquelle la protection assurée par le dispositif est complétée par une tige télescopique ;
- la figure 5 est une vue en perspective du dispositif illustré aux figures 3 et 4 qui est monté sur les dossiers de sièges lorsque ces derniers sont rabattus et la structure est en position relevée ;
- la figure 6 est une vue en perspective similaire à la précédente dans laquelle une partie des dossiers de sièges est en position relevée ; et
- la figure 7 est une vue en perspective similaire à la précédente, dans laquelle le dispositif est agencé en position basculée.

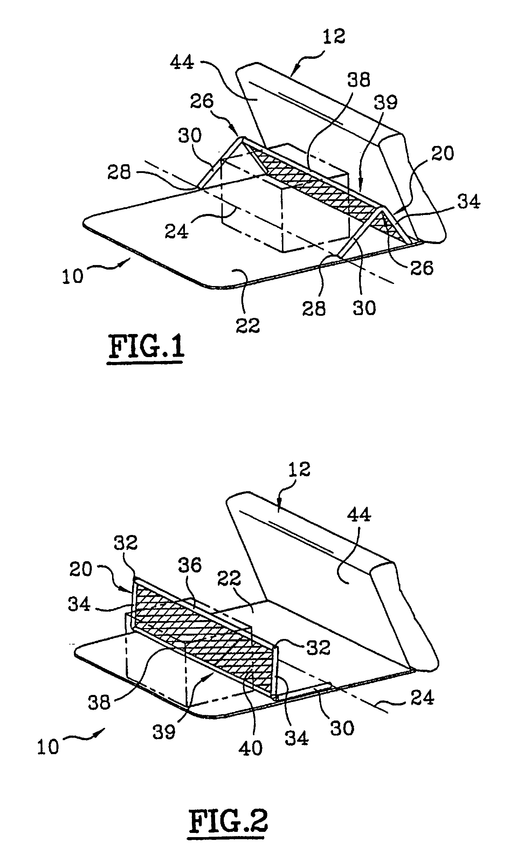

Comme on peut le voir sur la figure 1, le dispositif d'aménagement 10 de la partie arrière d'un véhicule automobile est agencé à l'arrière de l'habitacle du véhicule, dans une zone destinée au chargement, à proximité du dossier 12 de sièges ou d'une banquette.

Ce dossier 12 peut être conçu selon différents modèles. En effet, il existe des dossiers que l'on peut rabattre en position horizontale, afin de libérer de la place et de permettre un gain du volume vers l'avant de la zone de chargement.

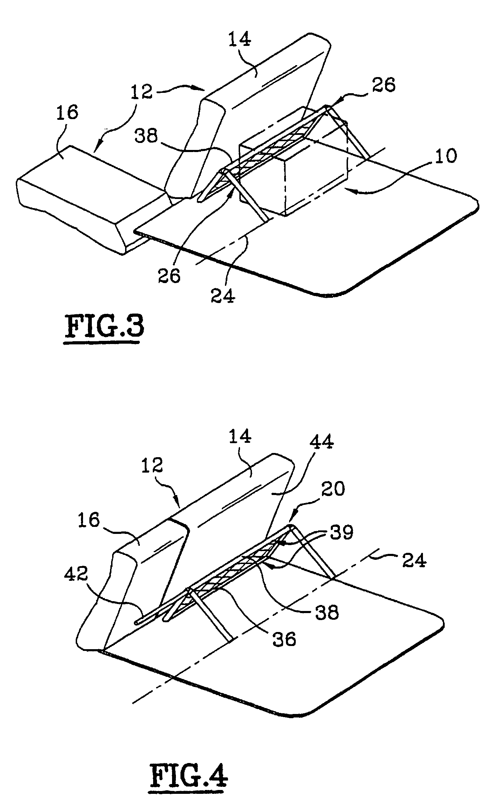

Il existe aussi des modèles de dossier ou de banquette qui sont séparés transversalement en plusieurs parties, qui peuvent être ainsi rabattues en position horizontale indépendamment. Avantageusement, et comme on peut le voir en particulier sur les figures 3, 4 et 6, le dossier 12 peut alors être séparé en une première partie de dossier 14, qui occupe transversalement environ les deux tiers de la largeur de la zone de chargement, et une seconde partie de dossier 16, qui occupe transversalement la largeur restante, soit environ un tiers de la largeur de l'habitacle.

Le dispositif 10 d'aménagement de la partie arrière est constitué d'une structure 20, prévue pour porter un écran de protection, qui est par exemple disposée sur le plancher 22 de l'habitacle et qui est articulée autour d'un axe transversal de rotation 24.

Comme on peut le voir plus particulièrement sur les figures 1 et 2, la structure 20 comporte des montants latéraux 26 qui sont par exemple des barres pliées sensiblement à angle droit, en forme générale de "L". Ces montants 26 comportent donc deux branches 30 et 34 qui sont agencées à angle droit pour réaliser une forme de "L" qui permet le décalage longitudinal de l'axe d'articulation 24 par rapport au plan de l'écran.

Des moyens de fixation et d'articulation de la structure 20 dans l'habitacle sont agencés sur les montants 26 et plus précisément aux extrémités libres 28 des branches 30 des montants en "L" 26.

A l'autre extrémité 32 des montants 26, et plus précisément à l'extrémité libre de la branche 34 du "L", est agencée une barre transversale 36 dite de division ou de compartimentation. Une seconde barre transversale 38 dite de protection est agencée sur les montants 26 de la structure 20, sensiblement à l'endroit de la jonction des branches 34 et 30 des montants 26, à l'intersection des branches du "L".

Les barres de division 36 et de protection 38 définissent un plan orienté suivant la direction des branches 34 et font elles-mêmes office d'écran 39. Tel que représenté aux figures 1 et 2, le plan 39 est sensiblement vertical ou parallèle à la face arrière du dossier 12, en fonction du pivotement du montant 34 autour de l'axe d'articulation 24. Les barres sont agencées de manière à empêcher les charges de venir heurter le dossier 12, ou de pénétrer dans la partie de l'habitacle dans laquelle sont installés les passagers. Il est aussi possible de fixer sur les barres 36 et 38 un écran complémentaire comme une plaque rigide ou un filet 40, comme cela est représenté sur les figures.

L'axe d'articulation 24, conformément aux enseignements de l'invention, est ainsi décalé longitudinalement par rapport au plan de l'écran 39.

Par conséquent, la structure 20 peut être disposée, par un simple pivotement autour de son axe d'articulation 24, selon deux positions distinctes, une position relevée de protection, illustrée à la figure 1, et une position basculée de compartimentation illustrée à la figure 2.

Dans la position relevée de protection, la barre 38 de protection est en position haute et la barre de division 36 en position basse, le plan de l'écran 39 étant alors sensiblement parallèle au dossier 12 de siège. Dans cette disposition, la barre de protection 38 permet de caler des charges vers l'avant ou d'arrêter des charges situées à l'arrière de l'habitacle dans la zone de chargement, dans le cas d'un déplacement de ces charges vers l'avant, par exemple dans le cas d'un choc frontal violent.

Dans cette position relevée, le filet 40, agencé entre les barres 36 et 38 à proximité du dossier 12, permet de constituer une petite zone de rangement pour objets peu encombrants, qui sont placés entre le filet 40 et la face arrière des sièges.

De plus, toujours dans cette position relevée les montants latéraux 26 peuvent maintenir latéralement des charges volumineuses, ces dernières étant disposées entre les barres 30 de la structure 20 pour éviter dans une certaine mesure un débattement latéral.

Dans la position basculée de compartimentation illustrée à la figure 2, la barre de protection 38 est en position basse et la barre de division 36 est en position haute. Ainsi, le plan 39 est agencé sensiblement verticalement et sépare la zone de chargement en deux zones distincts de plus faibles volumes. On peut ainsi moduler la zone de chargement, la séparer en deux parties avant et arrière, en évitant ainsi à certaines charges de faible poids d'être ballottées et de se déplacer dans ladite zone de chargement. On peut aussi utiliser cette séparation pour le transport de charges différentes ou pour séparer l'habitacle d'un animal domestique.

Le dispositif 10 comporte des moyens (non représentés) de retenue de la structure 20 dans l'une des positions relevée ou basculée, afin qu'elle ne puisse pas se déplacer en rotation autour de son axe 24 lors de son utilisation, mais seulement lorsque l'on désire passer d'une position à une autre. Ces moyens de retenue sont surtout importants lorsque la structure 20 est en position reculée de compartimentation, cette disposition étant moins stable que celle de la position relevée de protection.

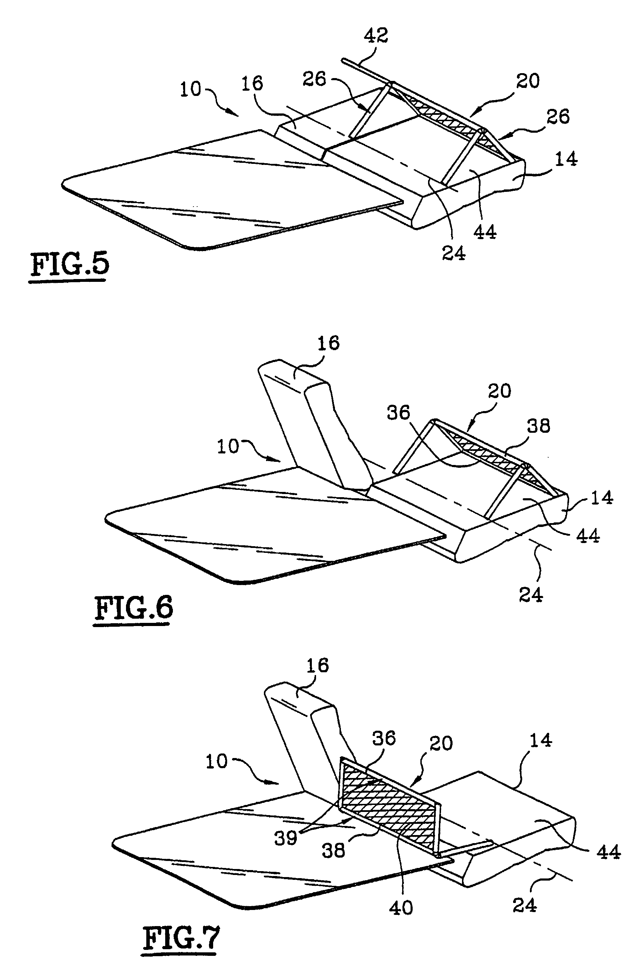

Comme il a déjà été vu, le dossier 12 peut être séparé en plusieurs parties, par exemple comme cela est représenté aux figures 3 à 7, en une première partie de dossier 14 large et une seconde partie de dossier 16 étroit. Ces deux parties 14 et 16 peuvent être rabattues en position horizontale indépendamment. On peut voir sur la figure 3, un cas dans lequel la seconde partie étroite 16 est rabattue en position horizontale, tandis que la première partie large 14 est en position relevée. Sur la figure 6, qui représente le cas contraire du cas précédent, la partie large 14 est rabattue en position horizontale et la partie étroite 16 est en position relevée. Enfin, sur la figure 5, les deux parties 14 et 16 du dossier 12 sont rabattues en position horizontale.

Du fait de la diversité de disposition, la structure 20 doit pouvoir s'adapter à chaque situation. En particulier, il est important que la fonction de protection de la partie avant de l'habitacle soit assurée pour les différents agencements de l'habitacle.

Dans ce but, et tout en conservant la forme et les caractéristiques vues précédemment, la structure 20 peut avoir une largeur adaptée à la partie de plus grande largeur 14. Dans ce cas, la structure 20 est agencée derrière la partie large 14 du dossier 12 et elle occupe transversalement environ deux tiers de la largeur de l'habitacle.

Pour protéger la zone transversale restante, la structure 20 comporte une tige 42, qui est située avantageusement dans le prolongement de la barre de protection 38 comme on peut le voir plus particulièrement sur la figure 4, pour protéger la partie transversale de l'habitacle non protégée par la partie principale de la structure 20. La tige 42 est escamotable et peut être aménagée dans la barre de protection 38 de manière télescopique, pour une utilisation du dispositif 10 dans le cas représenté plus particulièrement à la figure 3. Dans cette configuration, la tige 42 doit être escamotée afin de permettre une utilisation de tout le volume, rendu disponible par le rabattement de la partie étroite 16.

De même, la structure 20 peut comporter une autre tige semblable (non représentée), agencée dans le prolongement de la barre de division 36, pour opérer la compartimentation de la zone de chargement sur toute la largeur.

Enfin, le dispositif d'aménagement 10 peut être agencé de manière amovible pour pouvoir être monté sur le plancher de l'habitacle ou, comme on peut le voir sur les figures 5 à 7, sur la face arrière 44 de la partie la plus large 14 du dossier 12. On peut alors utiliser le maximum du volume de la partie arrière de l'habitacle, sans que la sécurité des passagers avant soit pénalisée ou que la structure 20 soit encombrante. Naturellement cette disposition sur la face arrière 44 du dossier 12 est aussi possible lorsque les sièges ont un dossier en une seule partie.

Comme on peut le voir plus particulièrement sur la figure 7, la structure 20 est, dans cette disposition aussi, articulée autour d'un axe 24 sur la face arrière 44 du dossier 12. Ainsi, la structure 20 peut être agencée en position basculée de compartimentation dans le cas où ladite structure 20 est agencée sur la face arrière 44 du dossier 12. Cet agencement permet une compartimentation plus adaptée au transport de certaines charges volumineuses.

Plusieurs combinaisons sont donc possibles, selon que l'on veuille utiliser le dispositif 10 sur une partie ou sur la totalité de la largeur de l'habitacle, selon que le dossier 12 est ou non en plusieurs parties, selon que le dossier 12 est en partie ou en totalité rabattu et enfin selon que l'on veuille utiliser la structure 20 dans une position relevée de protection ou dans une position basculée de compartimentation.

Le dispositif 10 peut aussi comporter différents filets ou sangles à enrouleurs, qui peuvent être fixés sur les barres de protection 38 ou de division 36, par exemple, pour compléter la protection de l'habitacle et notamment pour étendre la protection sur une hauteur plus importante ou pour compartimenter de façon plus nette les différentes zones de chargement.

La présente invention trouve naturellement à s'appliquer pour différentes conformations de la structure 20 du dispositif 10. En particulier, on peut imaginer différentes formes de barres et surtout différents types d'écrans, ou enfin une constitution et un agencement différents des montants 26.

## Revendications

1. Dispositif (10) d'aménagement de la partie arrière de l'habitacle d'un véhicule automobile formant zone de chargement, du type comportant un écran (39) transversal porté par une structure (20) qui est articulée, autour d'un axe transversal inférieur (24), décalé longitudinalement par rapport au plan de l'écran (39) entre une position relevée de protection, dans laquelle l'écran (39) est disposé sensiblement verticalement parallèlement à la face arrière (44) d'un dossier de siège (12), et une position basculée, **caractérisé en ce que** la structure (20) est agencée de manière amovible de façon à pouvoir être montée dans deux positions, une première position dans laquelle elle est montée articulée sur le plancher (22) de la zone de chargement, et une deuxième position dans laquelle elle est montée articulée sur une face arrière (44) d'un dossier (12, 14) de siège lorsque ce dernier est rabattu horizontalement.

2. Dispositif (10) d'aménagement selon la revendication 1, **caractérisé en ce que** la structure (20) de l'écran (39) comporte deux montants latéraux (26) qui comprennent des moyens d'articulation de la structure (20) et sur lesquels sont agencées au moins deux barres transversales (36,38) qui délimitent verticalement l'écran (39), une barre de protection (38) et une barre de division (36) qui sont respectivement en position haute et basse lorsque l'écran (39) est en position relevée.

3. Dispositif (10) d'aménagement selon la revendication 2, **caractérisé en ce que** les montants latéraux (26) de la structure (20) sont formés par des branches (30, 34) formant un "L", des moyens d'articulation étant agencés à une extrémité (28) d'une branche (30), la barre de division (36) à l'extrémité (32) de l'autre branche (34), et la barre de protection (38) sensiblement à l'intersection desdites branches (30, 34).

4. Dispositif (10) d'aménagement selon l'une quelconque des revendications précédentes, **caractérisé en ce qu'**il comporte un dispositif de blocage en rotation de la structure (20), notamment en position basculée.

5. Dispositif (10) d'aménagement selon l'une quelconque des revendications précédentes, **caractérisé en ce qu'**en position basculée, l'écran (39) s'étend sensiblement verticalement pour diviser en deux parties la zone de chargement.

6. Dispositif (10) d'aménagement selon l'une quelconque des revendications précédentes, **caractérisé en ce que** la structure (20) occupe transversalement une partie de la largeur de la zone de chargement pour une utilisation du dispositif (10) dans le cas où le dossier (12) est en plusieurs parties (14, 16) pouvant être rabattues individuellement.

7. Dispositif (10) d'aménagement selon la revendication 6, **caractérisé en ce qu'**il comporte une tige transversale (42) de protection, qui est agencée télescopique sur la structure (20) de l'écran (39) pour s'étendre en regard du reste de la largeur de la zone de-chargement.

8. Dispositif (10) d'aménagement selon la revendication 2, **caractérisé en ce qu'**un filet (40) est agencé entre les barres transversales (36, 38).

## Patentansprüche

1. Vorrichtung (10) zur Ausstattung des hinteren Teils der Zelle eines Kraftfahrzeugs, der eine Ladezone bildet, umfassend eine Querabschirmung (39), die durch eine Struktur (20) getragen wird, die um eine in Längsrichtung in Bezug auf die Ebene der Abschirmung (39) verschobene untere Querachse (24) herum schwenkbar ist zwischen einer hochgeklappten Schutzposition, in der die Abschirmung (39) annähernd vertikal parallel zur hinteren Seite (44) einer Sitzrückenlehne (12) angeordnet ist, und einer umgekippten Position, **dadurch gekennzeichnet, dass** die Struktur (20) auf abnehmbare Weise angeordnet ist, so dass sie in zwei Positionen montiert werden kann, einer ersten Position, in der sie gelenkig am Fußboden (22) der Ladezone montiert ist, und einer zweiten Position, in der sie gelenkig an einer hinteren Seite (44) einer Sitzrückenlehne (12, 14) montiert ist, wenn dieser horizontal hinuntergeklappt ist.

2. Vorrichtung (10) zur Ausstattung nach Anspruch 1, **dadurch gekennzeichnet, dass** die Struktur (20) der Abschirmung (39) zwei seitliche Säulen (26) umfasst, die Mittel zum Anlenken der Struktur (20) umfassen und an denen mindestens zwei Querstäbe (36, 38), die die Abschirmung (39) vertikal begrenzen, angeordnet sind, nämlich ein Schutzstab (38) und ein Trennstab (36), die sich in der oberen bzw. unteren Position befinden, wenn sich die Abschirmung (39) in der hochgeklappten Position befindet;

3. Vorrichtung (10) zur Ausstattung nach Anspruch 2, **dadurch gekennzeichnet, dass** die seitlichen Säulen (26) der Struktur (20) durch Äste (30, 34) gebildet werden, die ein "L" formen, wobei Mittel zum Anlenken an einem Ende (28) eines Astes (30), der Trennstab (36) am Ende (32) des anderen Astes (34) und der Schutzstab (38) annähernd am Schnittpunkt der Äste (30, 34) angeordnet sind.

4. Vorrichtung (10) zur Ausstattung nach einem der vorhergehenden Ansprüche, **dadurch gekennzeichnet, dass** sie eine Vorrichtung zur Blockierung der Drehbewegung der Struktur (20), insbesondere in der umgekippten Position, umfasst.

5. Vorrichtung (10) zur Ausstattung nach einem der vorhergehenden Ansprüche, **dadurch gekennzeichnet, dass** sich die Abschirmung (39) in der umgekippten Position annähernd vertikal erstreckt, um die Ladezone in zwei Teile zu unterteilen.

6. Vorrichtung (10) zur Ausstattung nach einem der vorhergehenden Ansprüche, **dadurch gekennzeichnet, dass** die Struktur (20) bei einer Verwendung der Vorrichtung (10) in dem Fall, dass die Rückenlehne (12) aus mehreren Teilen (14, 16) gebildet ist, die einzeln hinuntergeklappt werden können, in Querrichtung einen Teil der Breite der Ladezone einnimmt.

7. Vorrichtung (10) zur Ausstattung nach Anspruch 6, **dadurch gekennzeichnet, dass** sie eine Schutzstange (42) in Querrichtung umfasst, die teleskopartig an der Struktur (20) der Abschirmung (39) angeordnet ist, um sich gegenüber dem Rest der Breite der Ladezone zu erstrecken.

8. Vorrichtung (10) zur Ausstattung nach Anspruch 2, **dadurch gekennzeichnet, dass** zwischen den Querstäben (36, 38) ein Netz (40) angeordnet ist.

## Claims

1. A fitting device (10) for the rear portion of the passenger space of an automobile vehicle forming a loading area, of the type comprising a transverse screen (39) borne by a structure (20) which is articulated about a lower transverse axis (24), offset longitudinally with respect to the plane of the screen (39), between a raised protection position in which the screen (39) is disposed substantially vertically parallel to the rear surface (44) of a seat back (12) and a tilted position, **characterised in that** the structure (20) is arranged in a detachable manner so that it can be mounted in two positions, a first position in which it is mounted in an articulated manner on the floor (22) of the loading area, and a second position in which it is mounted in an articulated manner on a rear surface (44) of a seat back (12, 14) when the latter is folded down horizontally.

2. A fitting device (10) as claimed in claim 1, **characterised in that** the structure (20) of the screen (39) comprises two lateral uprights (26) which comprise means for articulating the structure (20) and on which there are disposed at least two transverse bars (36, 38) which vertically bound the screen (39), a protection bar (38) and a division bar (36), which are respectively in the high and low positions when the screen (39) is in the raised position.

3. A fitting device (10) as claimed in claim 2, **characterised in that** the lateral uprights (26) of the structure (20) are formed by arms (30, 34) forming an "L", articulation means being arranged at one end (28) of an arm (30), the division bar (36) at the end (32) of the other arm (34), and the protection bar (38) substantially at the intersection of the arms (30, 34).

4. A fitting device (10) as claimed in any one of the preceding claims, **characterised in that** it comprises a device for locking the structure (20) against rotation, in particular in the tilted position.

5. A fitting device (10) as claimed in any one of the preceding claims, **characterised in that** in the tilted position, the screen (39) extends substantially vertically in order to divide the loading area into two separate portions.

6. A fitting device (10) as claimed in any one of the preceding claims, **characterised in that** the structure (20) transversely occupies a portion of the width of the loading area so that the device (10) can be used in the case in which the seat back (12) is in a plurality of portions (14, 16) which may be individually folded down.

7. A fitting device (10) as claimed in claim 6, **characterised in that** it comprises a transverse protection rod (42) arranged telescopically on the structure (20) of the screen (39) in order to extend over the remainder of the width of the loading area.

8. A fitting device (10) as claimed in claim 2, **characterised in that** a net (40) is disposed between the transverse bars (36, 38).
